# EUROPÄISCHE PATENTANMELDUNG

(11) **EP 0 603 840 A2**
(43) Veröffentlichungstag der Anmeldung: **29.06.1994**
(21) Anmeldenummer: 93120641.1
(22) Anmeldetag: 21.12.1993
(51) Int. Cl.: F16C 11/04, F16C 11/00

(54) **Schwenklager**

(30) Priorität: 24.12.1992 DE 4244140
(71) Anmelder: TECHNOMATIK MASCHINENELEMENTE GMBH & CO FERTIGUNGS KG, D-83623 Lochen (DE)
(72) Erfinder: Breindl, Werner, D-85778 Inhausermoos (Haimhausen) (DE)
(74) Vertreter: Baumann, Eduard, Dipl.-Phys.

(57) **Zusammenfassung**

Die Erfindung betrifft ein Schwenklager zwischen einem Schwenkarm (1) wie einem Druckluftzylinder und einem festen Lagerpunkt (7). An einer Lagerbohrung (2) des Schwenkarmes (1) ist eine Lagerbuchse vorgesehen, an welcher über einen Lagerbolzen (3) eine Befestigung an einem oder zwei Befestigungsarmen (6) des festen Lagerpunktes (7) erfolgt. Zwischen Lagerbuchse und Schwenkarm ist ein elastisches Glied vorgesehen.

Um den Schwenkbereich zu erhöhen, die Schwenkkraft zu verringern, die Herstellung zu verbilligen und eine genauere definiertere Lagerung zu ermöglichen, besteht die Lagerbuchse aus zwei Teilbuchsen (11, 12) mit verbreiterten Außenrändern (13, 14), deren Innenkanten unter Zwischenlegung je eines elastischen O- Ringes (17, 18) auf die Gegenlagerfläche (15, 16) am Außenrand der beiden Öffnungen der Lagerbohrung (2) drücken.

## Beschreibung

Die Erfindung bezieht sich auf ein Schwenklager gemäß dem Oberbegriff des Anspruches 1.

Derartige Schwenklager sind vielseitig einsetzbar. Sie sollen eine Schwenkbewegung eines Schwenkarmes, der an seinem einen Ende schwenkbar gelagert ist, um die Schwenkachse ermöglichen, derart, daß das andere Ende des Schwenkarmes eine freie Schwenkbewegung ausführen kann. Beispielsweise kann ein derartiges Schwenklager an einem Druckluftzylinder eingesetzt werden, wobei der Schwenkarm als an einem Ende schwenkbar gelagerter Zylinder ausgebildet ist und das andere Ende des Schwenkarmes einen in Richtung des freien Endes beweglichen Kolben enthält, der in Abhängigkeit von der Druckluftzufuhr bestimmte Axialbewegungen längs der Zylinderachse durchführt und dadurch bestimmte mechanische Bewegungen steuern kann, beispielsweise das Öffnen und Schließen einer Auspuffklappe in einem Kraftfahrzeug, das Betätigen einer Druckluftbremse und dergleichen.

Gefordert sind eine möglichst große Schwenkbarkeit, eine ausreichende seitliche Stabilität senkrecht zur Ebene der Schwenkbewegung, ein relativ niedriger Widerstand bei der Schwenkbewegung, möglichst definierte gleiche Verhältnisse innerhalb der Serienherstellung, und die Aufrechterhaltung der angestrebten Werte über eine hohe Lebensdauer hinweg.

Bekannt ist ein Schwenklager der eingangs angegebenen Art, das eine Lagerbuchse aus Elastomer aufweist, die unter Spannung in die Lagerbohrung eingepreßt ist. An den beiden äußeren Enden der Lagerbuchse ergibt sich eine geringfügige Erweiterung, zur Vermeidung einer unerwünschten axialen Verschiebung ist in der Lagerbohrung eine nach außen verlaufende radiale Sicherungsbohrung vorgesehen, in welche nach dem Einpressen Elastomer eindringen kann und dadurch einen gewissen seitlichen Halt gewährleistet. Diese Lagerbuchse und damit das Schwenklager gewährleisten keine gleichbleibende definierte Einspannbarkeit der Lagerbuchse und keine stets gleiche definierte Länge, was zu entsprechend unterschiedlichen Spannungsverhältnissen am Lagerpunkt führt. Auch die Lagerachse ist im Hinblick auf das freie schwenkbare Ende des Schwenkarmes wie eines Druckluftzylinders nicht genau definiert, was beim entsprechenden Anwendungszweck zu unterschiedlichen Ergebnissen führt. Der Verschleiß ist relativ hoch, wie auch der erforderliche Kraftaufwand beim Schwenken, da das für die Lagerbuchse erforderliche elastische Glied aus verhältnismäßig festem Material bestehen muß.

Ein anderes Schwenklager verwendet eine Lagerbuchse, bei der eine metallische Innenbuchse, welche den Lagerbolzen aufnimmt, über ein aufvulkanisiertes Elastomer oder elastisches Glied mit der Lagerbohrung selbst verbunden ist. Das Elastomer wird hierbei bei der Montage zwischen Innenbuchse und Lagerbohrung eingepreßt. Die durch den Preßdruck bedingte Erweiterung an den beiden gegenüberliegenden äußeren Öffnungen der Lagerbohrung ermöglichen einen gewissen, aber nicht hundertprozentigen Schutz gegen axiale Verschiebungen der Lagerbuchse innerhalb der Lagerbohrung. Dadurch ist auch hier in aller Regel eine radiale Sicherheitsbohrung am Umfang der Lagerbohrung erforderlich. Für das Elastomer selbst bleibt ohne Erweiterung der Lagerbohrung entsprechend weniger Volumen übrig.

Eine dritte Ausführungsform eines Schwenklagers verwendet zusätzlich zur Innenbuchse auch noch eine Außenbuchse, wobei das Elastomer zwischen beiden Buchsen angeordnet ist. Der Mantel an Elastomer ist bei gleicher Lagerbohrung natürlich entsprechend geringer. Damit ein elastischer Effekt noch aufrechterhalten werden. kann, muß hier ein weicheres Material verwendet werden. Durch die geringere Wandstärke des Elastomers ist auch eine geringere Schrägneigung des Schwenkarmes zur Lagerachse im eingespannten Zustand möglich.

Der Erfindung liegt das Problem zugrunde, ein Schwenklager gemäß dem Oberbegriff des Anspruches 1 zu verbessern, die oben angeführten Nachteile bekannter Schwenklager zu vermeiden, insbesondere eine stets gleiche Einspannbreite für den Lagerpunkt zu schaffen, einen Schwenkbereich über eine volle Umdrehung zu ermöglichen und die Lebensdauer zu erhöhen.

Das Problem wird erfindungsgemäß durch die Merkmale des Kennzeichens des Anspruches 1 gelöst. Weitere Ausgestaltungen der Erfindung sind in den rückbezogenen Unteransprüchen unter Schutz gestellt.

Die Erfindung ermöglicht eine volle Sicherheit gegenüber einem axialen Herausschieben der Lagerbuchse, eine Verschwenkbarkeit in beliebig großen Winkeln einschließlich voller Umdrehungen. Es ist stets ein genau definiertes Einspannmaß bzw. eine stets gleichbleibende Breite der Lagerbuchse gegeben. Die gewünschte bei der Herstellung eingestellte Vorspannung verändert nicht das Einspannmaß. Die breitere Auflagefläche gibt einen festen Sitz der am Lagebolzen verschraubten Klemmschrauben oder dergleichen, während bisher bekannte dünne Lagerhülsen in die Klemmschrauben eingepreßt wurden und sich verkeilten, so daß in dieser Rillen entstehen konnten, wobei die Kanten der Lagerbuchse verbogen wurden und hierdurch das Einspannmaß und die Einspannfestigkeit beeinträchtigt wurden. Die beiden Lagerbuchsen können erheblich stabiler ausgebildet werden, dennoch ist eine größere seitliche axiale Schrägneigung zwischen Schwenkarm und Lagerpunkt möglich, da zwischen den O-Ringen kein Elastomer vorgesehen ist. Auch die Verbindung des Lagerbolzens mit der außen stark verbreiterten Lagerbuchse ist erheblich stabiler als bei bekannten Anordnungen. Axiale seitliche Verschiebungen der Lagerbuchse werden zuverlässig vermieden. Der Reibungswiderstand beim Schwenken ist geringer, auch der beim Schwenken erzeugte Verschleiß. Dadurch wird die Lebensdauer erhöht. Die Herstelllung ist deutlich billiger, u.a. wegen der Verwendung handelsüblicher O- Ringe als elastisches Glied.

Beim Erfindungsgegenstand besteht die Lagerbuchse aus zwei Teilbuchsen, die in die zwei Öffnungen der Lagerbohrung eingeschoben werden und dort entweder in gleichbleibender definierter Weise mit den inneren Buchsenkanten aneinander anstoßen oder vorzugsweise miteinander verbunden, z.B. verrastet sind, vorzugsweise unlösbar, damit das Schwenklager komplett montiert ausgeliefert werden kann. Die Verrastung kann beispielsweise über einen Hakenring an einer inneren Buchsenkante und einen darüber stülpbaren zylinderförmigen Widerhakenring an der inneren Buchsenkante der anderen Teilbuchse erfolgen, wobei wenigstens entweder Hakenring oder Widerhakenring radial und elastisch soweit beweglich sind, daß ein Ineinanderrasten möglich ist. Gegebenenfalls sind auch wenigstens an einem Teil, beispielsweise am äußeren zylinderförmigen Widerhakenring in gewissen Abständen seitliche Umfangsschlitze vorgesehen.

Die Schwenkbarkeit wird über ein elastisches Glied in Form von zwei O- Ringen bewirkt, die jeweils zwischen den Innenkanten der beiden verbreiterten Außenränder der beiden Teilbuchsen und äußeren Gegenlagerflächen am Schwenkarm unter Vorspannung dazwischengelegt sind.

Die Gegenlagerflächen können als Vertiefungen an den beiden Öffnungen der Lagerbohrung angeordnet sein, derart, daß die O-Ringe auch an ihrem Umfang definierte Anlageflächen haben, wodurch auch die Lebensdauer und Wirksamkeit erhöht wird, wobei auch die Außenränder der beiden Teilbuchsen weitgehend versenkt angeordnet werden können.

Als Material kann für die Lagerbuchse fester Kunststoff oder Stahl, insbesondere Leichtmetall wie eine Aluminiumlegierung, eingesetzt werden. Als Material für die elastischen O- Ringe kann Gummi, ein elastischer Kunststoff oder ein anderes Elastomer eingesetzt werden.

Ein Ausführungsbeispiel der Erfindung ist in der Zeichnung dargestellt.

Es zeigt:
- Fig. 1: ein Schwenklager mit einem an einem Lagerpunkt schwenkbar befestigten Schwenkarm in Form eines Druckluftzylinders im Schnitt,
- Fig. 2: die Einzelteile der zweiteiligen Lagerbuchse mit O-Ringen, die innerhalb der Lagerbohrung bis zum Verrasten miteinander zusammengeschoben werden,
- Fig. 3: die Seitenansicht auf die Lagerbohrung mit Gegenlagerfläche ohne Lagerbuchse.

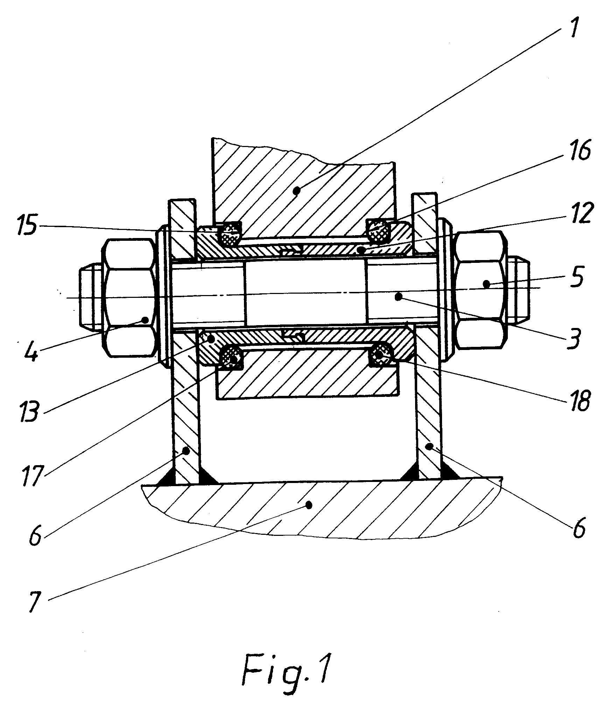

In Fig. 1 ist der Schwenkarm mit 1 bezeichnet, der hier die Form eines Druckluftzylinders für den Einsatz bei einem Lastkraftwagen oder Omnibus aufweist. Der Schwenkarm 1 ist am ortsfesten Lagerpunkt 7 über den Lagerbolzen 3 mit Hilfe von einem oder zwei sich gegenüberliegenden, an jeweils äußeren Schraubengewinden des Lagerbolzens 3 angreifenden Klemmschrauben 4 und 5 befestigt, die durch Durchtrittsöffnungen der zwei parallelen, nach oben stehenden Befestigungsarme 6 des Lagerpunktes 7 hindurch und durch die Lagerbuchse hindurch, welche aus den zwei Teilbuchsen 11, 12 besteht, festgeklemmt ist. Die inneren Buchsenkanten sind über einen inneren Hakenring 19 an der einen inneren Buchsenkante und einen über diesen Hakenring 19 darüber gestülpten Widerhakenring 20 an der anderen inneren Buchsenkante der anderen Teilbuchse 12 unlösbar und in einem definierten Abstand zueinander verbunden, wodurch gleichzeitig die beiden O-Ringe 15, 16 durch die Innenkanten der gegenüberliegenden verbreiterten Außenränder 13, 14 an die entsprechenden Gegenlagerflächen 15, 16, welche Ringform aufweisen, in definierter Weise gepreßt werden.

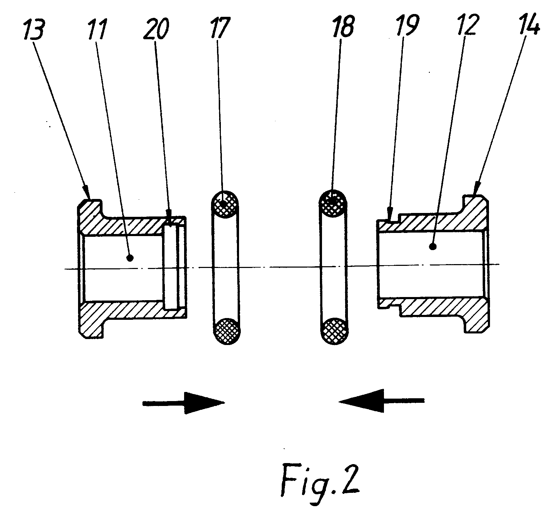

Fig. 2 zeigt die linke Teilbuchse 11 und die rechte Teilbuchse 12 mit dem linken verbreiterten Außenrand 13 bzw. dem rechten verbreiterten Außenrand 14 und dem Hakenring 19 an einer inneren Buchsenkante sowie den mit dem Hakenring zusammenwirkenden Widerhakenring 20 an der inneren Buchsenkante der anderen Teilbuchse 11. Weiterhin sind die beiden zugehörigen O-Ringe 17 und 18 gezeigt.

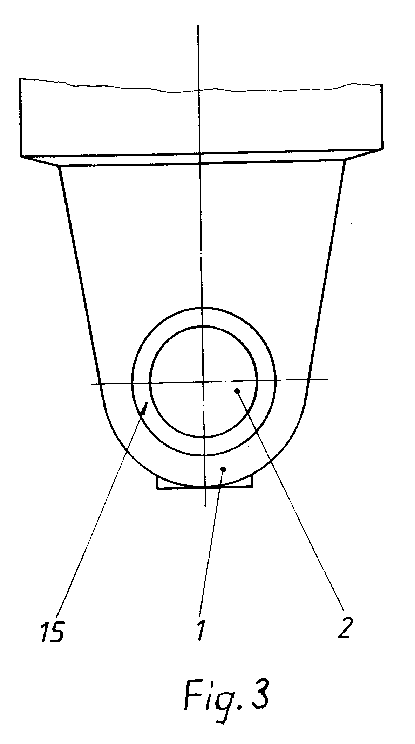

Fig. 3 zeigt einen Blick auf den Schwenkarm 1 ohne Anbringung der Lagerbuchse von der Seite, wobei im wesentlichen eine vertiefte ringförmige Gegenlagerfläche 15 am Außenrand der Lagerbohrung 2 ersichtlich ist.

## Patentansprüche

1. Schwenklager zwischen einem Schwenkarm (1) wie einem Druckluftzylinder und einem festen Lagerpunkt (7), mit einer Lagerbohrung (2), in welcher eine Lagerbuchse angeordnet ist, durch die hindurch ein Lagerbolzen (3) geführt ist, der mit Hilfe von Klemmschrauben (4, 5) oder dergleichen eine feste Verbindung der beiden Außenkanten der Lagerbuchse mit dem Lagerpunkt (7) bewerkstelligt, wobei ein elastisches Glied zwischen Lagerbuchse und Schwenkarm (1) eine Schwenkbewegung um die Lagerachse und Zylinderachse ermöglicht,
dadurch gekennzeichnet,
a) daß die Lagerbuchse aus zwei Teilbuchsen (11, 12) mit je einem verbreiterten Außenrand (13, 14) besteht,
b) daß die Innenkante jedes der gegenüberliegenden verbreiterten Außenränder (13, 14) gegen je eine äußere Gegenlagerfläche (15, 16) radial im Anschluß an die beiden Öffnungen der Lagerbohrung (2) ausgerichtet ist,
c) daß die beiden inneren Buchsenkanten der beiden Teilbuchsen (11, 12) zur Bildung einer genau definierten Buchsenlänge aneinander angrenzen, oder daß die inneren Endabschnitte der beiden Teilbuchsen miteinander verbunden, vorzugsweise verrastet, sind,
d) daß das elastische Glied aus je einem an der Seite vorgespannten elastischen O- Ring (17, 18) zwischen der Innenkante jedes Außenrandes (13, 14) und zugehöriger Gegenlagerfläche (15, 16) besteht.

2. Schwenklager nach Anspruch 1, dadurch gekennzeichnet, daß an den inneren Buchsenkanten jeder der zusammenwirkenden Teilbuchsen (11, 12) zusammenwirkende, vorzugsweise unlösbare, Schnappverschluß- Einrichtungen vorgesehen sind.

3. Schwenklager nach Anspruch 2, dadurch gekennzeichnet, daß die erste innere Buchsenkante einen Hakenring (19) und die zweite innere Buchsenkante einen über den Hakenring (19) stülpbaren zylinderförmigen Widerhakenring (20) aufweist, wobei wenigstens der Hakenring (19) oder der Widerhakenring (20) zum gegenseitigen Einrasten um einen gewissen Betrag radial elastisch beweglich ausgebildet ist.

4. Schwenklager nach einem der Ansprüche 1 bis 3, dadurch gekennzeichnet, daß als Material für die beiden Teilbuchsen (11, 12) fester und temperaturbeständiger Kunststoff oder vorzugsweise Metall einschließlich Leichtmetall eingesetzt wird.

5. Schwenklager nach einem der Ansprüche 1 bis 4, dadurch gekennzeichnet, daß als Material für das O-förmige elastische Glied (17, 18) elastischer Gummi oder Kunststoff mit hoher Temperaturbeständigkeit und Lebensdauer eingesetzt wird.

6. Schwenklager nach einem der Ansprüche 1 bis 5, dadurch gekennzeichnet, daß die Gegenlagerflächen (15, 16) als ringförmige Vertiefungen an den beiden Öffnungen der Lagerbohrung (2) und somit als Halterung für die elastischen O-Ringe (17, 18) ausgebildet sind.
